# EUROPEAN PATENT SPECIFICATION

(11) **EP 1 914 215 B1**
(45) Date of publication and mention of the grant of the patent: **13.05.2009**
(21) Application number: 06122330.1
(22) Date of filing: 16.10.2006
(51) Int. Cl.: C04B 41/71

(54) **Decorative wall panels and process for manufacturing such panels**
Dekorative Wandplatten und Verfahren zu ihrer Herstellung
Panneaux de mur décorative et procédé de fabrication desdits panneaux

(43) Date of publication of application: 23.04.2008
(73) Proprietor: Eternit Aktiengesellschaft, 69126 Heidelberg (DE); REDCO NV, 1880 Kapelle-op-den-Bos (BE)
(72) Inventor: Schmidt, Gerhard, 76669 Bad Schönborn (DE); Wöstmann, Peter, 33332 Gütersloh (DE); Schneider, Michaela, 68799 Reilingen (DE); Kalbskopf, Reinhard, 3080 Tervuren (BE)
(74) Representative: Claeys, Pierre

(56) References cited:
- EP-A1- 0 894 780

## Description

The present invention relates to decorative wall panels, particularly to colored coated cementitious boards, such as fiber-cement reinforced boards and cement bonded wood particles boards hereinafter referred as colored cement bonded panels and to a process of manufacturing such colored cement bonded panels.

More specifically, the invention relates to colored cement bonded panels comprising:
a) a dried conventional coating applied onto each panel and made of one or more applied layers whereby at least one layer of the conventional coating contains at least one pigment, and
b) a radiation cured coating composition applied on said dried conventional coating.

It is usually known that a disadvantageous property of cementitious products is the occurrence of efflorescence phenomena. These are attributable to the fact that their mineral binders contain cations of valence greater than one, for example Ca²⁺, in an alkaline environment. Reaction with the carbon dioxide from the air can therefore cause development at the surface of the cement bonded product of white spots of calcium carbonate which have low solubility in water and are unsightly.

Another problem of cementitious products is their unattractive greyish color, even by mass coloring through the addition of pigments during their manufacture, bright colors are not obtained.

To avoid the abovementioned disadvantageous properties, cement bonded products are frequently provided with a coating. For this purpose, use is generally made of aqueous coating systems which comprise an aqueous polymer dispersion as binder. Usual binders encompass styrene-acrylate copolymers, homo- and copolymers of vinyl acetate, pure acrylates and the like. However, this results in fundamental disadvantages: firstly, the emulsifiers can be dissolved out from the coating on exposure to moisture. This in turn leads to a lessening of the elasticity of the coating. The presence of acid groups has the further disadvantage that the polymers swell due to environmental water take-up, thus lessening the strength of the coating. The strength of such coatings is also considerably lessened by the swelling of the polymer during the setting of the cementitious product. Another inconvenience of thermoplastic coating systems in general is their soft surface and hence their insufficient resistance against mechanical wear. Moreover, UV weathering resistance and resistance to chemicals of thermoplastic coating systems generally appear to be insufficient.

It has been possible to improve the protection of cement bonded products e.g. by using a second coating applied on cementitious substrates pre-coated with acrylic dispersions. EP-A-0192627 describes the use of a two-component polyurethane finish. However, these coating systems suffer from long curing times and often contain harmful solvents; moreover, the recovery of the overspray is almost impossible.

US6162511 discloses radiation curable coating formulations suitable for fiber-cement boards; however such coatings suffer from bad adhesion on the substrate.

Colored cement bonded panels as mentioned in the preamble of claim 1 are known from EP-A-0894780 which describes the use of radiation-curable coatings applied on conventional coatings obtained by aqueous free-radical emulsion polymerization for inorganic moldings. However, mineral moldings coated according to this process suffer from lack of adhesion between the conventional coating and the radiation-curable coating. Moreover, UV curing is less efficient in shadow areas or on the edges of the mineral molding. Another problem is that UV-curable coating spoiled on the back side of the mineral molding remains uncured as well. Consequently the back side and the edges are often tacky, which leads to problems upon handling and storage.

Furthermore, the coating systems described not only in EP-A-0894780 but also in EP-A-0192627 lead to panels characterised by undesired reflectances due to their glossy and shiny surface appearance. This is particularly disadvantageous in tunnel applications. The use of matting agents such as amorphous silica as coating components results in porous surfaces, water absorption and reduced UV stability, which makes these panels less suitable for exterior applications.

It is an object of the invention to overcome at least some of these drawbacks by providing colored cement bonded panels in which adhesion between the conventional coating and the radiation-curable coating is improved whilst solving the problems of the undesirable reflectance of the glossy and shining surface. Panels of this type can therefore be used as interior and exterior cladding panels.

To this end, the invention provides colored cement bonded panels according to the preamble of claim 1, characterised in that at least the lastly applied layer of said conventional coating comprises functional groups which are reactive with isocyanate groups and in that said radiation cured coating composition (i) comprises at least one radiation cured polymer A and at least one chemically crosslinked and radiation cured polymer B comprising isocyanate groups having reacted with said functional groups and optionally with ambient moisture, and (ii) has a surface gloss measured according to DIN 67530 equal or less than 20% at an angle of incidence of 85°.

The presence of isocyanate groups having reacted with functional groups results in an improved adhesion between the radiation-curable coating and the conventional coating.

Other embodiments of the colored cement bonded panels according to the invention are indicated in the appended claims.

The invention also relates to a process for manufacturing colored coated durable cementitious panels, in particular for manufacturing colored coated cementitious boards, such as fiber-cement reinforced boards and cement bonded wood particles boards, having a controlled surface gloss, excellent adhesion and weathering resistance.

The process for manufacturing colored coated cement bonded panels according to the invention comprises the following steps:
a) first applying to cement bonded panels a conventional coating made of one or more layers whereby at least one layer of the conventional coating contains at least one pigment,
b) film forming and drying said conventional coating, and
c) applying subsequently to the dried conventional coating a radiation curable coating composition, said process being characterized in that at least said lastly applied layer of said conventional coating comprises functional groups being reactive with isocyanate groups and in that said radiation curable coating composition comprises at least one radiation curable polymer A having ethylenically unsaturated double bonds and at least one chemically and radiation crosslinkable polymer B having not only ethylenically unsaturated double bonds but also predetermined free isocyanate groups, said process further comprises the steps of:
d) chemical anchorage of the radiation curable coating within said conventional coating,
e) covering the cement bonded panels coated with the radiation curable coating composition by means of a radiation permeable film having a predetermined surface finish,
f) curing said radiation curable coating composition by means of a radiation passing through said radiation permeable film, and
g) removing the radiation permeable film from the cement bonded panels coated with the cured radiation curable coating composition.

The reaction of the isocyanate groups of the radiation curable coating composition with the functional groups present in the conventional coating starts as from the contact between both coatings. This results in a chemical anchorage increasing the adhesion between the radiation curable coating composition and the conventional coating.

The use of the radiation permeable film during the curing of the radiation-curable coating enables to prevent the free isocyanate groups to react with ambient medium (moisture, oxygen), enables to control the surface gloss of the colored cement bonded panels and protects the ethylenically unsaturation against chain-breaking reaction of oxygen.

Advantageously, the process further comprises a reaction of free isocyanate groups with ambient moisture.

When applying the radiation-curable coating, it sometimes appears that the radiation-curable coating overflows the area to be cured of the cement bonded panels surface of the cement bonded panels which has to be coated and cured. This results in tacky panels on the back side area and on the edge areas because those areas are not or insufficiently exposed to radiation which leads to storage and handling problems of the aforementioned panels The reaction of the water molecules of ambient moisture with the free isocyanate groups cooperates to solve the problem of the storage of the colored cement bonded panels by providing a reaction resulting in non tacky panels which can be therefore easily handled and stored without damaging the coating. Moreover, this reaction avoids the smell of radiation-uncured coating remaining in the cavities of the surface of the panels.

Other embodiments of the process according to the invention are indicated in the appended claims.

The process for the manufacture of the fiber-reinforced cement boards coated according to the process of the present invention most widely used is the Hatschek process, which is a modified sieve cylinder paper making machine. Other manufacturing processes are the Magnani process, injection, extrusion, flow-on and others. The color-coated fiber-reinforced cement boards according to the process of the present invention are preferably manufactured by the Hatschek process. The green or uncured sheet is optionally post-compressed usually at pressures in the range from 22 to 30 MPa to obtain the desired density and subsequently air-cured for about 5 hours, preferably in an oven at a temperature not higher than 80°C. These sheets are possibly but not necessarily autoclaved, generally within 1 week after air-curing and at temperatures in the range of from 160°C to 190°C while subjected to pressures ranging generally from about 0,7 MPa to 1,3 MPa during preferably about 6 to 24 hours.

Fiber-reinforced cement panels are manufactured starting from an aqueous hydraulic-setting suspension comprising one or more cementitious binders, processing fibers, and optionally reinforcing fibers, processing aids, additives and/or fillers. This aqueous suspension with a solid content generally ranging from 2 to 10% is mixed so as to obtain a substantially uniform distribution of the components. The suspension is then dewatered, and the fresh product (green product) is shaped in the form of a plane sheet, which is optionally post-compressed to densify and subsequently left to harden under atmospheric conditions (air-curing) or under specific pressure, temperature and humidity conditions (autoclaving).

The hydraulic-setting composition used for the manufacture of fiber-reinforced cement boards coated by the process according to the present invention comprises cement as hydraulic binder. Suitable cements are Portland cement, high-alumina cement, blast-furnace Portland cement, trass cement, slag cement, and others. Portland cement is preferred.

The hydraulic-setting composition used for the manufacture of the fiber-reinforced cement boards coated by the process according to the present invention possibly comprises reinforcing organic and/or inorganic fibers. Examples of reinforcing inorganic fibers are glass fibers, ceramic fibers, wollastonite fibers and the like, and their blends. Examples of organic reinforcing fibers are fibers of cellulose, of polyolefins such as polyethylene or polypropylene, of polyamide, of polyacrylonitrile, of polyester, of aramid, of polyvinylalcohol, of carbon, and the like, and their blends. The content of reinforcing fibers is preferably equal to or less than 10% by weight with respect to the initial total weight in the dry state of the hydraulic-setting composition.

The hydraulic-setting composition used for the manufacture of the fiber-reinforced cement boards according to the present invention comprises processing aids, such as processing fibers, flocculants, antifoam agents. Appropriate processing fibers are cellulose fibers, polyolefin fibrids, and others, and their blends. The amount of processing fibers is preferably equal to or less than 10% by weight with respect to the initial total weight in the dry state of the hydraulic-setting composition.

The hydraulic-setting composition used for the manufacture of the fiber-reinforced cement boards according to the present invention may further comprise fillers and/or additives, such as fly ash, amorphous silica, ground quartz, ground rock, clays, blast-furnace slags, carbonates, pozzolana, etc. The total quantity of fillers and/or additives is preferably less than 50% by weight with respect to the initial total weight in the dry state of the hydraulic-setting composition.

Cement bonded wood particle panels are generally manufactured by a semi-dry process, whereby the hydraulic setting composition with a solids content generally ranging from 50 to 80%, is projected to support templates by means of rapidly rotating needle rollers. This hydraulic composition comprises essentially one or more cementitious binders and wood chips. The ratio between the wood chips and the cement, and the particle size of the wood chips vary according to the desired surface roughness. The templates are covered with loosely distributed material and stacked on each other; the stacked filled templates are subsequently compacted until the desired board density is reached and the boards are finally submitted to a curing step. Most often, these cement bonded wood particle boards comprise a central layer and two surface layers, whereby the core layer has a reduced cement content and generally comprises coarser wood chips with respect to the opposing outer surface layers.

Step (a) of the process according to the present invention is the application of a conventional pigmented coating. Preferably, the conventional coating used in the process according to the invention is not curable by radiation or by chemical crosslinking. Suitable coatings are those with binders obtained by aqueous free radical or ionic emulsion polymerization. Acrylic and/or methacrylic (co)polymers are particularly preferred as binders of the conventional coatings.

These acrylic and/or methacrylic (co)polymers are usually prepared by aqueous radically initiated emulsion polymerization of esters of acrylic acid and/or methacrylic acid with C1-C12 alkanols as well as a minor amount of acrylic and/or methacrylic acid as monomers. Preference is given in particular to esters of acrylic and methacrylic acid with C1-C8 alkanols; ethyl acrylate, n-butyl acrylate, ethylhexyl acrylate and methylmethacrylate are particularly preferred. The emulsion polymerization requires the use of surfactants as stabilizers. Non-ionic surfactants are preferred. Alcohol ethoxylates are particularly preferred. Conventional coatings with a hydroxyl number (measured according to ISO 4629) of at least 1 are preferred. Hydroxyl numbers of at least 1,5 are particularly preferred.

Preferably the minimum film forming temperature during the drying of the conventional coating is below 60°C.

At least one layer of the conventional coating composition comprises at least one pigment. Typical pigments are metal oxides, such as titanium dioxide, iron oxides, spinell pigments, titanates and other oxides, or organic alkali-resistant pigments such as phtalocyanines and azo compounds.

Preferably the pigment volume concentration of the pigmented layer of the conventional coating is in the range of from 0,01 to 25%. Pigment volume concentrations in the range of from 0,05 to 20% are particularly preferred. Good results were obtained with a pigment volume concentration for the pigmented layer of the conventional coating between 0,1 and 10%.

The conventional coating composition generally comprises, besides the polymeric binders and pigments, also usual auxiliaries, e.g. fillers, wetting agents, viscosity modifiers, dispersants, defoamers, preservatives and hydrophobisizers, biocides, fibers and other usual constituents. Examples of suitable fillers are aluminosilicates, silicates, alkaline-earth metal carbonates, preferably calcium carbonate in the form of calcite or lime, dolomite, and also aluminum silicates or magnesium silicates, e.g. talc.

The solids content of suitable conventional coatings is generally in the range from 20 to 60% by weight.

The conventional coating compositions comprise as liquid component essentially water and, if desired, an organic liquid miscible with water, for example an alcohol.

The conventional coating compositions are applied at a wet coating weight in the range from 50 to 500 g/m², in particular from 70 to 300 g/m², in a known manner, for example by spraying, trowelling, knife application, brushing, rolling or pouring onto the cement bonded board, or by a combination of one or more applications.

The conventional coating is preferably applied by roller coating or curtain coating. In a particular preferred embodiment of the process according to the present invention, a first layer of the conventional coating is applied by roller coating, subsequently followed by a second layer applied by curtain coating. The coating composition of the first layer of the conventional coating can be the same or different from the second layer of the conventional coating. Good results were obtained by the application of a first layer of unpigmented conventional coating, and the subsequent application of a second layer of the same conventional coating, but to which at least one pigment has been added.

Before the radiation-curable preparation is applied, the first conventional coating is dried at room temperature or preferably at elevated temperature, for example from 40 to 150 °C (step b).

The dry thickness of the first conventional coating is generally from 20 µm to 100 µm, preferably from 50 µm to 70 µm.

The radiation-curable composition applied in step (c) of the process according to the present invention comprises at least one polymer A having ethylenically unsaturated double bonds, which is radiation curable.

Possible polymers A for the radiation-curable compositions are in principle any polymer which has ethylenically unsaturated double bonds which can undergo radical-initiated polymerization on exposure to UV radiation or electron beam radiation. Care should be taken here that the content of ethylenically unsaturated double bonds in the polymer is sufficient to ensure effective crosslinking. The content of ethylenically unsaturated double bonds in A is generally in the range from 0,01 to 1,0 mol/100 g of A, more preferably from 0,05 to 0,8 mol/100 g of A and most preferably from 0,1 to 0,6 mol/100 g of A.

Suitable polymers A are polyurethane derivatives which contain ethylenically unsaturated double bonds, such as polyurethane acrylates.

The radiation-curable composition applied in step (c) of the process comprises at least one chemically and radiation crosslinkable polymer B.

Suitable polymers B are free isocyanate-bearing polyurethanes having ethylenically unsaturated double bonds. Polyurethane acrylates with free isocyanate groups are preferred. The reaction of the free isocyanate groups with moisture present in the air takes place at room temperature, in particular, in areas not exposed to radiation and hence not completely cured (back side, edges, cavities formed in the radiation-curable coating, ...). The free isocyanate groups of the radiation-curable composition also react with the functional groups (step d) such as hydroxyl groups present in the conventional coating thereby providing a chemical anchorage of the radiation curable composition within the conventional coating. The free isocyanate content of B measured according to DIN EN ISO 11 909, ranges usually from 5 to 20% by weight. Preferably the free isocyanate content of B is between 8 and 20% by weight and more preferably between 10 and 18 % by weight.

The weight ratio of B /A is preferably in the range of 0,03/0,2. A weight ratio of B/A in the range of 0,05/0,1 is particularly preferred.

Besides the polymers A and B, the radiation-curable preparations may also contain a compound different from polymer A and polymer B and having a molecular weight of less than 800 g/mol and capable of polymerization by cationic or free-radical pathways. These compounds have generally at least one ethylenically unsaturated double bond and/or one epoxy group and a molecular weight being less than 800 g/mol. Such compounds generally serve to adjust to the desired working consistency of the radiation-curable preparations. This is particularly important if the preparation contains no other diluents, such as water and/or inert organic solvents, or contains these only to a subordinate extent. Such compounds are therefore also termed reactive diluents. The proportion of reactive diluents, based on the total amount of (A+B) and the reactive diluent in the radiation-curable preparation, is preferably in the range of 0 to 90% by weight, and most preferably in the range of from 5 to 50 % by weight.

Preferred reactive diluents are the esterification products of di- or polyhydric alcohols with acrylic and/or methacrylic acid. Such compounds are generally termed polyacrylates or polyether acrylates. Hexanediol diacrylate, tripropylene glycol diacrylate and trimethylolpropane triacrylate are particularly preferred.

The radiation-curable compositions may also comprise polymers which have cationically polymerizable groups, in particular epoxy groups. These include copolymers of ethylenically unsaturated monomers, the copolymers containing, as comonomers, ethylenically unsaturated glycidyl ethers and/or glycidyl esters of ethylenically unsaturated carboxylic acids. They also include the glycidyl ethers of OH-group-containing polymers, such as OH-group-containing polyethers, polyesters, polyurethanes and novolacs. They include moreover the glycidyl esters of polymers containing carboxylic acid groups. If it is desired to have a cationically polymerizable component, the compositions may comprise, instead of or together with the cationically polymerizable polymers, a low-molecular-weight, cationically polymerizable compound, for example a di- or polyglycidyl ether of a low-molecular-weight di- or polyol or the di- or polyester of a low-molecular-weight di- or polycarboxylic acid.

The radiation-curable compositions comprise usual auxiliaries, such as thickeners, flow control agents, defoamers, UV stabilizers, emulsifiers, surface tension reducers and/or protective colloids. Suitable auxiliaries are well known to the person skilled in the coatings technology. Silicones, particularly polyether modified polydimethylsiloxane copolymers, may be used as surface additives to provide good substrate wetting and good anti-crater performance by reduction of surface tension of the coatings. Suitable stabilizers encompass typical UV absorbers, such as oxanilides, triazines, benzotriazoles (obtainable as Tinuvin™ grades from Ciba Geigy) and benzophenones. These may be used in combination with usual free-radical scavengers, for example sterically hindered amines, e.g. 2,2,6,6-tetramethylpiperidine and 2,6-di-tert-butylpiperidine (HALS compounds). Stabilizers are usually used in amounts of from 0,1 to 5,0% by weight and preferably from 0,3 to 2,5% by weight, based on the polymerizable components present in the preparation.

If curing is performed by UV radiation (step f), the preparations to be used comprise at least one photoinitiator. A distinction is to be made here between photoinitiators for free-radical curing mechanisms (polymerization of ethylenically unsaturated double bonds) and photoinitiators for cationic curing mechanisms (cationic polymerization of ethylenically unsaturated double bonds or polymerization of compounds containing epoxy groups). Photoinitiators are not needed for electron beam curable compositions.

Suitable photoinitiators for free-radical photopolymerization, i.e. polymerization of ethylenically unsaturated double bonds, are benzophenone and benzophenone derivatives, such as 4-phenylbenzophenone and 4-chlorobenzophenone, Michler's ketone, anthrone, acetophenone derivatives, such as 1-benzoylcyclohexan-1-ol, 2-hydroxy-2,2-dimethylacetophenone and 2,2-dimethoxy-2-phenylacetophenone, benzoin and benzoin ethers, such as methyl benzoin ether, ethyl benzoin ether and butyl benzoin ether, benzil ketals, such as benzil dimethyl ketal, 2-methyl-1-[4-(methylthio)phenyl]-2-morpholinopropan-1-one, anthraquinone and its derivatives, such as .beta.-methylanthraquinone and tert-butylanthraquinone, acylphosphine oxides, such as 2,4,6-trimethylbenzoyldiphenylphosphine oxide, ethyl-2,4,6-trimethylbenzoylphenylphosphinate and bisacylphosphine oxides.

Suitable photoinitiators for cationic photopolymerization, i.e. the polymerization of vinyl compounds or compounds containing epoxy groups, are aryl diazonium salts, such as 4-methoxybenzenediazonium hexafluorophosphate, benzenediazonium tetrafluoroborate and toluenediazonium tetrafluoroarsenate, aryliodonium salts, such as diphenyliodonium hexafluoroarsenate, arylsulfonium salts, such as triphenylsulfonium hexafluorophosphate, benzene- and toluenesulfonium hexafluorophosphate and bis[4-diphenylsulfoniophenyl] sulfide bishexafluorophosphate, disulfones, such as diphenyl disulfone and phenyl-4-tolyl disulfone, diazodisulfones, imidotriflates, benzoin tosylates, isoquinolinium salts, such as N-ethoxyisoquinolinium hexafluorophosphate, phenylpyridinium salts, such as N-ethoxy-4-phenylpyridinium hexafluorophosphate, picolinium salts, such as N-ethoxy-2-picolinium hexafluorophosphate, ferrocenium salts, titanocenes and titanocenium salts.

The abovementioned photoinitiators are used, in amounts from 0,05 to 20% by weight, preferably from 0,1 to 10% by weight and in particular from 0,1 to 5% by weight, based on the polymerizable components of the radiation-curable composition.

The radiation-curable compositions are applied in a known manner, e.g. by spraying, trowelling, knife application, brushing, rolling or pouring onto the cement bonded board. It is also conceivable that the preparation may be applied to the cement board by hot-melt processes or by powder-coating processes. The radiation-curable composition is preferably applied by roller-coating. The radiation-curable composition is usually applied to obtain a dry thickness in the range from 10 to 100 µm, preferably from 50 to 80 µm. The application may take place either at room temperature or at elevated temperature, but preferably not above 100 °C.

In step (e) of the process, the liquid coated surface is roll-covered with a radiation permeable film before applying radiation. Care is taken to have an intimate contact between the liquid coated panels and the controlled surface layer of the film, in order to remove entrapped bubbles and air pockets between the overlying film and the panel by the roller. This film provides protection against the radical chain-breaking reaction of oxygen, and avoids the use of inert gas atmosphere in the case of electron beam curing. Moreover, this covering film has a controlled gloss surface with a predetermined surface finish on the side in contact with the liquid coated panel surface. Suitable radiation permeable films are thin plastic films of polyester or polyolefins. The controlled surface gloss on the radiation permeable film can be obtained in various ways, such as embossing, printing, coating, etching or by the use of matting additives. Moreover, the radiation permeable film with its regularly distributed surface micro-roughness can possibly be texturized, e.g. allowing labeling.

In step (f) of the process according to the present invention, the top coating may be cured by exposure to a UV radiation of wavelength generally from 200 to 600 nm. Suitable examples of UV sources are high and medium pressure mercury, iron, gallium or lead vapor lamps. Medium pressure mercury vapor lamps are particularly preferred, e.g. the CK or CK1 sources from the company IST (Institut für Strahlungstechnologie). The radiation dose usually sufficient for crosslinking is in the range from 80 to 3000 mJ/cm². Any solvent present, in particular water, is dried out before the curing in a separate drying step preceding curing, for example by heating to temperatures in the range from 40 to 80 °C, or by exposure to IR radiation.

In case of electron beam curing, irradiation is performed with high-energy electrons (usually from 100 to 350 keV, by applying a high voltage to tungsten filaments inside a vacuum chamber), and the actual curing step takes place in an inert, oxygen-free atmosphere.

Step (g) of the process according to the present invention is the removal of the covering film after irradiation of the cured radiation-curable composition by peeling it off. The radiation permeable film should thus have sufficient mechanical strength, tear resistance and low elongation rate to withstand this operation. Suitable radiation permeable films are oriented polyester or oriented polyolefin films. Good results were obtained using an untreated oriented polypropylene film with at least one matt side.

In conclusion, the process according to the present invention leads to durable colored coated cement bonded panels with controlled gloss surfaces, excellent adhesion (undercoat-substrate adhesion and interlayer coating adhesion) and excellent mechanical wear and weathering resistance; moreover they are resistant to chemicals. Such panels and their use for interior and exterior wall cladding are further objects of the present invention.

The colored coated cement bonded panels according to the present invention present on their turn a controlled gloss, delustered surface on the coated side. The reflectometer value is generally not greater than 20% at an angle of incidence of 85° as defined by DIN 67530. Preferably this value is not greater than 15%.

The colored coated cement bonded panels according to the present invention further have an excellent adhesion, i.e. base coating-board as well as interlayer coating adhesion. The adhesion is measured at least 2 weeks after the application of the coatings and according to the ASTM D 3359 method using a Scotch 8981 tape. The colored cement bonded panels according to the present invention have adhesion values of at least 4B, preferably of 5B.

The panels being the object of the present invention moreover have an outstanding weathering resistance, being especially appreciated for outdoor applications. At least 2 weeks after the application of the coatings, the panels according to the present invention successfully withstand Xeno-lamp (wavelength 297 nm) tests according to EN ISO 11341 Cyclus A-1997 with 5000 hours exposure, and show an absolute value of gloss change measured by DIN 67530 at an angle of incidence of 85° of not greater than 4%. Adhesion tape tests (according to an internal method comparable to ASTM D 3359 method but without cross cutting and using a sellotape n°4651 supplied by Beiersdorf AG, Hamburg, and performed at least 2 weeks after the application of the coatings) performed on boards submitted to 50 freeze-thaw cycles according to EN12467 (each of 12 hours, with 6 hours at +40°C and 6 hours at -40°C) in the presence of a 3% salt solution showed intact surfaces.

### EXAMPLES

### Example.-

The following process has been applied on ETERPLAN™-N (fiber-reinforced cement board) :
1) first application of a water-based acrylic dispersion comprising essentially Primal™ SS-521 commercialized by Rohm and Haas (Hydroxyl number = 2), a first layer by roller coating, and a second layer by curtain coating to obtain a dry thickness of 50-70 µm after drying at a temperature of 60-80°C during at least one minute. The trials have been run with two formulations differing in their pigments : one anthracite-colored formulation and one green-colored formulation
2) subsequent application by roller coating to the resultant coated surface of a radiation-curable composition, e.g. FWO 4342/5 commercialized by Lanxess with a thickness of 70 g/m² and comprising essentially
   - 79,6 wt% Desmolux™ UA VP LS2308 (A, a polyurethane acrylate which is radiation curable)
   - 5 wt% Desmolux™ UA VP LS2337 (B, free isocyanate groups bearing polyurethane acrylate which is chemically and radiation crosslinkable)
   - 10 wt% Hexanedioldiacrylate (reactive diluent)
   - 2,9 wt% Irgacure™184 (Photoinitiator commercialized by Ciba Geigy)
   - 1 wt% Sanduvor™ 3206 (UV absorber commercialized by Clariant)
   - 0,5 wt% Tinuvin™ 292 (HALS commercialized by Ciba Geigy)
   - 1 wt% Byk™ 306 (surface additive for improved wetting commercialized by BYK-Chemie)
3) covering this liquid coated surface before irradiation with the matt side of an untreated OPP film Treofan ERA with one matt side and a thickness of 57 µm
4) curing the applied composition with UV radiation using medium pressure mercury lamps with a dose of 600-1000 mJ/cm²
5) removing the radiation permeable film from the coated substrate by peeling this film off.
6) hardening of the uncovered coating in contact with the ambient moisture.

The results are shown in table 1.

### Comparative example 1.-

The same process as described in example 1 is applied, but using FWO 3342/3 (a pure UV curable topcoating, comprising the same components as FWO 4342/5, but without Desmolux™ VP LS2337)

The results are shown in table 1.

Visual inspection of the surface submitted to the tape test after 50 freeze-thaw cycles in the presence of a 3% salt solution showed a glossy surface in the damaged areas, as the UV cured topcoat has been removed due to the weak adhesion between this topcoat and the acrylic undercoating.

### Comparative example 2.-

The same process as described in example 1 is used, but using Primal™ E357EF (hydroxyl number = 0,4) as first coating.

The results are shown in table 1.

**Table 1**

| Example | Color | Tape test after 50 Freeze-thaw cycles (% surface damaged)* | ASTM D 3359 * |
|---|---|---|---|
| 1a | Anthracite | 0 % | 5B |
| 1b | Green | 0 % | 5B |
| Comp. 1 | Anthracite | 20 % | 3B |
| Comp. 2 | Green | 60 % | 3B |

| | | | |
|---|---|---|---|
| * adhesion between UV cured topcoat and the acrylic undercoating. | | | |

Although the preferred embodiments of the invention have been disclosed for illustrative purpose, those skilled in the art will appreciate that various modifications, additions or substitutions are possible, without departing from the scope of the invention as disclosed in the accompanying claims.

## Claims

1. Colored cement bonded panels comprising:
a) a dried conventional coating applied onto each panel and made of one or more applied layers whereby at least one layer of the conventional coating contains at least one pigment, and
b) a radiation cured coating composition applied on said dried conventional coating,
**characterized in that** at least the lastly applied layer of said conventional coating comprises functional groups which are reactive with isocyanate groups and **in that** said radiation cured coating composition (i) comprises at least one radiation cured polymer A and at least one chemically crosslinked and radiation cured polymer B comprising isocyanate groups having reacted with said functional groups and optionally with ambient moisture, and (ii) has a surface gloss measured according to DIN 67530 equal or less than 20% at an angle of incidence of 85°.

2. Panels according to claim 1, wherein the free isocyanate content of polymer B with respect to polymer B is comprised between 5 and 20 % w/w, preferably from 8 to 20 % w/w, more preferably from 10 to 18 % w/w, measured according to DIN EN ISO 11909.

3. Process for manufacturing colored coated cement bonded panels comprising the following steps:
a) first applying to cement bonded panels a conventional coating made of one or more layers whereby at least one layer of the conventional coating contains at least one pigment,
b) film forming and drying said conventional coating, and
c) applying subsequently to the dried conventional coating a radiation curable coating composition,
**characterized in that** at least said lastly applied layer of said conventional coating comprises functional groups being reactive with isocyanate groups and **in that** said radiation curable coating composition comprises at least one radiation curable polymer A having ethylenically unsaturated double bonds and at least one chemically and radiation crosslinkable polymer B having not only ethylenically unsaturated double bonds but also predetermined free isocyanate groups, said process further comprises the steps of:
d) chemical anchorage of the radiation curable coating within said conventional coating,
e) covering the cement bonded panels coated with the radiation curable coating composition by means of a radiation permeable film having a predetermined surface finish,
f) curing said radiation curable coating composition by means of a radiation passing through said radiation permeable film, and
g) removing the radiation permeable film from the cement bonded panels coated with the cured radiation curable coating composition.

4. Process according to claim 3, further comprising a reaction of free isocyanate groups with ambient moisture.

5. Process according to claim 3 or claim 4, wherein the conventional coating is not curable by radiation or by chemical crosslinking.

6. Process according to anyone of the claims 3 to 5, wherein the conventional coating is obtained by aqueous free radical or ionic emulsion polymerization.

7. Process according to anyone of the claims 3 to 6, wherein the conventional coating is an aqueous emulsion dispersion, preferably an aqueous emulsion dispersion comprising an acrylic and/or methacrylic (co)polymer.

8. Process according to anyone of the claims 3 to 7, wherein the conventional coating is applied to obtain a dry thickness in a range between 20 and 100 µm and wherein the radiation curable coating composition is applied to a thickness comprised in a range between 10 and 100 µm

9. Process according to anyone of the claims 3 to 8, wherein the polymer A comprises a polyurethane acrylate.

10. Process according to anyone of the claims 3 to 9, wherein the radiation permeable film having a predetermined surface finish is an oriented matt polypropylene film.

11. Use of a panel manufactured according to the process as claimed in any one of claims 3 to 10 for interior and exterior wall cladding.

## Patentansprüche

1. Bunte zementgebundene Wandplatten, umfassend:
a) eine getrocknete herkömmliche Beschichtung, die auf jede Wandplatte aufgebracht wird, und aus einer oder mehreren aufgebrachten Schichten besteht, wobei mindestens eine Schicht der herkömmlichen Beschichtung mindestens ein Pigment enthält, und
b) eine strahlungsgehärtete Zusammensetzung, die auf die getrocknete herkömmliche Beschichtung aufgebracht wird,
**dadurch gekennzeichnet, dass** mindestens die zuletzt aufgebrachte Schicht der herkömmlichen Beschichtung funktionelle Gruppen umfasst, die mit Isocyanatgruppen reaktiv sind, und dadurch, dass die strahlungsgehärtete Beschichtungszusammensetzung (i) mindestens ein strahlungsgehärtetes Polymer A und mindestens ein chemisch vernetztes und strahlungsgehärtetes Polymer B umfasst, das Isocyanatgruppen umfasst, die mit den funktionellen Gruppen und optional mit Umgebungsfeuchtigkeit reagiert haben, und (ii) einen Oberflächenglanz hat, der gemessen nach DIN 67530 bei einem Einfallswinkel von 85 ° kleiner oder gleich 20 % ist.

2. Wandplatten nach Anspruch 1, wobei, gemessen nach DIN EN ISO 11909, der Gehalt an freien Isocyanaten des Polymers B, bezogen auf Polymer B, im Bereich zwischen 5 und 20 Gew.-%, bevorzugt von 8 bis 20 Gew.-%, stärker bevorzugt von 10 bis 18 Gew.-% liegt.

3. Verfahren zur Herstellung von bunten, mit Zement gebundenen Wandplatten, das die folgenden Schritte umfasst:
a) zunächst Aufbringen einer herkömmlichen Beschichtung, die aus einer oder mehreren Schichten besteht, auf die mit Zement gebundenen Wandplatten, wobei mindestens eine Schicht der herkömmlichen Beschichtung mindestens ein Pigment enthält,
b) Filmbilden und Trocknen der herkömmlichen Beschichtung, und
c) anschließend Aufbringen einer strahlungsgehärteten Beschichtungszusammensetzung auf die getrocknete herkömmliche Beschichtung,
**dadurch gekennzeichnet, dass** mindestens die zuletzt aufgebrachte Schicht der herkömmlichen Beschichtung funktionelle Gruppen umfasst, die mit Isocyanatgruppen reaktiv sind und **dadurch**, dass die strahlungshärtbare Zusammensetzung mindestens ein strahlungshärtbares Polymer A, das ethylenisch ungesättigte Doppelbindungen aufweist, und mindestens ein chemisch und strahlungsvernetzbares Polymer B umfasst, das nicht nur ethylenisch ungesättigte Doppelbindungen aufweist, sondern auch vorbestimmte freie Isocyanatgruppen, wobei das Verfahren ferner die folgenden Schritte umfasst:
d) chemische Verankerung der strahlungshärtbaren Beschichtung innerhalb der herkömmlichen Beschichtung,
e) Bedecken der zementgebundenen Wandplatten, die mit der strahlungshärtbaren Beschichtungszusammensetzung beschichtet sind, mittels eines strahlungsdurchlässigen Films, der ein vorbestimmtes Oberflächenfinish aufweist,
f) Härten der strahlungshärtbaren Beschichtungszusammensetzung mittels einer Strahlung, die durch den strahlungsdurchlässigen Film hindurch dringt, und
g) Entfernen des strahlungsdurchlässigen Films von den zementgebundenen Wandplatten, die mit der gehärteten strahlungshärtbaren Beschichtungszusammensetzung beschichtet sind.

4. Verfahren nach Anspruch 3, das ferner eine Reaktion freier Isocyanatgruppen mit Umgebungsfeuchtigkeit umfasst.

5. Verfahren nach Anspruch 3 oder Anspruch 4, wobei die herkömmliche Beschichtung durch Strahlung oder durch chemische Vernetzung nicht härtbar ist.

6. Verfahren nach einem der Ansprüche 3 bis 5, wobei die herkömmliche Beschichtung durch wässrige radikalische oder ionische Emulsionspolymerisation erhalten wird.

7. Verfahren nach einem der Ansprüche 3 bis 6, wobei die herkömmliche Beschichtung eine wässrige Emulsionsdispersion ist, bevorzugt eine wässrige Emulsionsdispersion, die ein Acryl-und/oder Methacryl(co)polymer umfasst.

8. Verfahren nach einem der Ansprüche 3 bis 7, wobei die herkömmliche Beschichtung aufgebracht wird, um eine Trockenschichtstärke im Bereich zwischen 20 und 100 µm zu erhalten, und wobei die strahlungs- härtbare Beschichtungszusammensetzung bis zu einer Dicke im Bereich zwischen 10 and 100 µm aufgebracht wird.

9. Verfahren nach einem der Ansprüche 3 bis 8, wobei Polymer A ein Polyurethanacrylat umfasst.

10. Verfahren nach einem der Ansprüche 3 bis 9, wobei der strahlungsdurchlässige Film, der ein vorbestimmtes Oberflächenfinish aufweist, ein orientierter matter Polypropylenfilm ist.

11. Verwendung einer Wandplatte, die gemäß dem Verfahren wie in einem der Ansprüche 3 bis 10 beansprucht hergestellt wurde, zur Wandverkleidung in Innen- und Außenräumen.

## Revendications

1. Panneaux de couleur liés au ciment comprenant :
a) un revêtement conventionnel séché, appliqué sur chaque panneau et constitué d'une ou plusieurs couches appliquées, où au moins une couche du revêtement conventionnel contient au moins un pigment, et
b) une composition de revêtement durcie par irradiation, appliquée sur ledit revêtement conventionnel séché,
**caractérisés en ce qu'**au moins la dernière couche appliquée dudit revêtement conventionnel comprend des groupes fonctionnels qui sont réactifs vis-à-vis de groupes isocyanate, et où ladite composition de revêtement durcie par irradiation (i) comprend au moins un polymère A durci par irradiation et au moins un polymère B réticulé chimiquement et durci par irradiation, comprenant des groupes isocyanate ayant réagi avec lesdits groupes fonctionnels et le cas échéant avec l'humidité ambiante, et (ii) possédant un brillant de surface, mesuré selon DIN 67530, égal ou inférieur à 20% sous un angle d'incidence de 85°.

2. Panneaux suivant la revendication 1, dans lesquels la teneur en isocyanate libre du polymère B par rapport au polymère B est comprise entre 5 et 20% en poids, de préférence entre 8 et 20% en poids, plus préférablement entre 10 et 18% en poids, mesurée selon DIN EN ISO 11909.

3. Procédé de fabrication de panneaux à revêtement de couleur liés au ciment, comprenant les étapes suivantes :
a) d'abord, une application sur les panneaux liés au ciment d'un revêtement conventionnel constitué d'une ou plusieurs couches, où au moins une couche du revêtement conventionnel contient au moins un pigment,
b) formation de film et séchage dudit revêtement conventionnel, et
c) application subséquente, sur le revêtement conventionnel séché, d'une composition de revêtement durcissable par irradiation,
**caractérisé en ce qu'**au moins la dernière couche appliquée dudit revêtement conventionnel comprend des groupes fonctionnels réactifs avec des groupes isocyanate et **en ce que** ladite composition de revêtement durcissable par irradiation comprend au moins un polymère A durcissable par irradiation possédant des doubles liaisons éthyléniquement insaturées et au moins un polymère B réticulable chimiquement et par irradiation possédant, non seulement des doubles liaisons éthyléniquement insaturées, mais aussi des groupes isocyanate libres prédéterminés, ledit procédé comprenant en outre les étapes suivantes :
d) ancrage chimique du revêtement durcissable par irradiation dans ledit revêtement conventionnel,
e) recouvrement des panneaux liés au ciment revêtus de la composition de revêtement durcissable par irradiation au moyen d'un film perméable aux radiations et possédant une finition de surface prédéterminée,
f) durcissement de ladite composition de revêtement durcissable par irradiation par un rayonnement traversant ledit film perméable au rayonnement, et
g) enlèvement du film perméable aux rayonnements des panneaux liés au ciment revêtus de la composition de revêtement durcissable par irradiation durcie.

4. Procédé suivant la revendication 3, comprenant en outre une réaction de groupes isocyanate libres avec l'humidité ambiante.

5. Procédé suivant la revendication 3 ou la revendication 4, dans lequel le revêtement conventionnel n'est pas durcissable par irradiation ou par réticulation chimique.

6. Procédé suivant l'une quelconque des revendications 3 à 5, dans lequel le revêtement conventionnel est obtenu par polymérisation en émulsion aqueuse par radicaux libres ou ionique.

7. Procédé suivant l'une quelconque des revendications 3 à 6, dans lequel le revêtement conventionnel est une dispersion en émulsion aqueuse, de préférence une dispersion en émulsion aqueuse comprenant un co(polymère) acrylique et / ou méthacrylique.

8. Procédé suivant l'une quelconque des revendications 3 à 7, dans lequel le revêtement conventionnel est appliqué de manière que l'on obtienne une épaisseur à sec de l'ordre de 20 à 100 µm et dans lequel la composition de revêtement durcissable par irradiation est appliquée à une épaisseur comprise dans une plage de 10 à 100 µm.

9. Procédé suivant l'une quelconque des revendications 3 à 8, dans lequel le polymère A comprend un polyuréthanne.- acrylate.

10. Procédé suivant l'une quelconque des revendications 3 à 9, dans lequel le film perméable aux rayonnements ayant une finition de surface prédéterminée est un film de polypropylène mat orienté

11. Utilisation d'un panneau fabriqué suivant le procédé tel que revendiqué dans l'une quelconque des revendications 3 à 10 pour le parement de murs intérieurs et extérieurs.
